(19) Europäisches Patentamt
European Patent Office
Office européen des brevets

(11) **EP 2 681 895 B1**

(12) **EUROPEAN PATENT SPECIFICATION**

(45) Date of publication and mention
of the grant of the patent:
**19.08.2020 Bulletin 2020/34**

(21) Application number: **12707427.6**

(22) Date of filing: **16.02.2012**

(51) Int Cl.:
*H04L 29/08* (2006.01)          *H04W 4/02* (2018.01)
*H04W 4/021* (2018.01)          *H04W 4/08* (2009.01)
*H04W 4/21* (2018.01)

(86) International application number:
**PCT/US2012/025425**

(87) International publication number:
**WO 2012/121854 (13.09.2012 Gazette 2012/37)**

(54) **METHOD AND APPARATUS FOR GROUPING CLIENT DEVICES BASED ON CONTEXT SIMILARITY**

VERFAHREN UND VORRICHTUNG ZUR GRUPPIERUNG VON CLIENT-VORRICHTUNGEN AUF BASIS VON KONTEXTÄHNLICHKEITEN

PROCÉDÉ ET APPAREIL PERMETTANT DE GROUPER DES DISPOSITIFS CLIENT EN FONCTION D'UNE SIMILARITÉ DE CONTEXTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2011 US 201161449517 P**
**10.02.2012 US 201213371057**

(43) Date of publication of application:
**08.01.2014 Bulletin 2014/02**

(73) Proprietor: **Qualcomm Incorporated**
**San Diego, CA 92121-1714 (US)**

(72) Inventors:
• **KIM, Taesu**
**San Diego, California 92121-1714 (US)**
• **HWANG, Kyu Woong**
**SanDiego, California 92121-1714 (US)**

(74) Representative: **Loveless, Ian Mark**
**Reddie & Grose LLP**
**The White Chapel Building**
**10 Whitechapel High Street**
**London E1 8QS (GB)**

(56) References cited:
**WO-A1-2010/087797**          **US-A1- 2007 130 580**
**US-A1- 2008 160 977**          **US-A1- 2010 216 490**
**US-A1- 2010 332 668**

**Description**

## TECHNICAL FIELD

The present disclosure relates generally to grouping client devices. More specifically, the present disclosure relates to methods and apparatus for grouping client devices based on environmental sounds of the client devices.

## BACKGROUND

Modern mobile communication systems provide a variety of services to mobile device users. Such systems often provide advertising and social networking services to mobile device users based on location information of the mobile devices. Location information of a user's mobile device allows a service provider to infer the user's environment and offer more targeted advertising and social network services to the user.

One conventional method determines the locations of mobile devices by using GPS (Global Positioning System). Mobile communication systems may identify mobile devices in nearby locations based on the locations of mobile devices determined by using GPS. Based on the location information, the systems may provide social networking services to the users of the identified mobile devices. For example, a service provider may provide same advertising information to users of mobile devices determined to be in the same location. Related prior art is disclosed in patent publications US 2008/160977 A1, WO 2010/087797 A1, US 2010/216490 A1, US 2010/332668 A1 and US 2007/130580 A1.

Unfortunately, conventional systems such as a system providing location based service may not be able to provide targeted services to users based on their context such as activities, environments, etc, regardless of their locations. In using the above-described method, the same services are typically provided to mobile devices in the same general location or nearby location, e.g., in the same shopping mall, because the services are provided based on the location information. However, a service provider may not be able to provide the same targeted advertising information to users in a different shopping mall.

Thus, there is a need for a method and apparatus for grouping users of client devices to allow delivery of more targeted services to users of client devices based on their context information.

## SUMMARY

The present invention is defined by the subject matter of the appended independent claims. The present disclosure provides methods and apparatus for grouping client devices based on context similarity.

According to one aspect of the present disclosure, a method for grouping a plurality of client devices is disclosed. The method includes receiving sound descriptors from the plurality of client devices. Each client device extracts a sound descriptor from an environmental sound. The sound descriptor is transmitted to a server, which determines a similarity of the sound descriptors received from the client devices. The server groups the client devices into at least one similar context group based on the similarity of the sound descriptors. This disclosure also describes an apparatus, a server, a combination of means, and a computer-readable medium relating to this method.

According to another aspect of the present disclosure, a server including a receiver, a similarity processing unit, and a grouping unit is provided. The receiver is configured to receive sound descriptors from the plurality of client devices, wherein the sound descriptors are extracted from an environmental sound captured by each client device. The similarity processing unit is adapted to determine a similarity of the sound descriptors received from the client devices. Also, in the grouping unit, the plurality of client devices are grouped into a similar context group based on the similarity of the sound descriptors.

According to yet another aspect of the present disclosure, a client device including a sound sensor, a sound processor, and a transmitting unit is provided. The sound sensor is configured to capture an environmental sound. Also, the sound processor is configured to extract a sound descriptor from the captured environmental sound. The sound descriptor is transmitted by the transmitter to a server configured to group a plurality of client devices into at least one similar context group based on the similarity of the sound descriptor from the client device and sound descriptors from the other client devices.

## BRIEF DESCRIPTION OF THE DRAWINGS

FIG. 1 illustrates a schematic overview of a system for grouping client devices based on substantially identical environmental sounds according to one embodiment.

**FIG. 2** illustrates a schematic overview of a system for grouping client devices based on similar environmental sounds according to one embodiment.

**FIG. 3** illustrates an overview diagram of a system for grouping client devices based on sound descriptors extracted from environmental sound sequences over time according to one embodiment.

**FIG. 4** shows a system for grouping client devices, including a server and a plurality of client devices, according to one embodiment.

**FIG. 5** illustrates a flowchart of a method, performed by a client device, for use in grouping client devices in a similar context according to one embodiment.

**FIG. 6** illustrates a flowchart of a method, performed by a server, for grouping client devices in a similar context and determining a context of each client device according to one embodiment.

**FIG. 7** depicts an exemplary two-dimensional cluster distribution of training sound components clustered into sixteen clusters.

**FIG. 8** depicts exemplary histograms of environmental sounds generated at a plurality of client devices.

**FIG. 9A** shows a more detailed block diagram of a client device according to one embodiment.

**FIG. 9B** shows a more detailed block diagram of a client device according to another embodiment.

**FIG. 10** illustrates a flowchart of a method, performed by a server, for determining context of client devices according to one embodiment.

**FIG. 11** illustrates a flowchart of a method, performed by a server, for grouping client devices based on histograms according to one embodiment.

**FIG. 12** illustrates a flowchart of a method, performed by a server, for grouping client devices based on a similarity matrix derived from histograms according to another embodiment.

**FIG. 13** is a block diagram of an exemplary client device in a wireless communication system according to one embodiment.

## DETAILED DESCRIPTION

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

In some embodiments described below, a client-server system may be employed where a server collects information describing environmental sounds from client devices. The client devices may include any suitable user devices, such as a cellular phone, a laptop, a device for use in a car, or the like. In some other embodiments, the server may be implemented as a client device in a peer-to-peer system including the client devices.

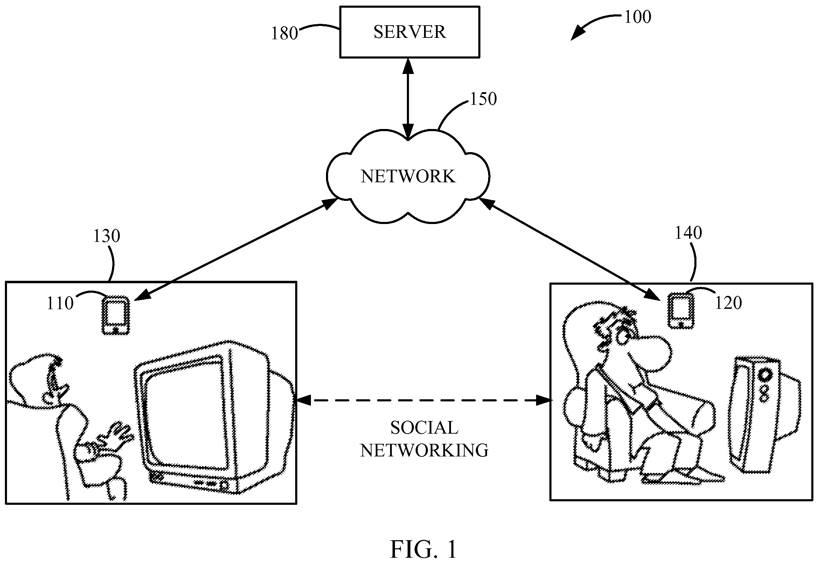

**FIG. 1** illustrates a schematic overview of a system 100 for grouping client devices 110 and 120 based on substantially identical environmental sounds according to one embodiment. In this system, the client devices 110 and 120 capture environmental sounds at locations 130 and 140, respectively, and extract sound features from the environmental sounds. The client devices 110 and 120 send the sound features to a server 180 via network 150. The server 180 determines whether the two sound features received from the client devices 110 and 120 are the same. For example, if users of the client devices 110 and 120 are watching a same TV program in different locations 130 and 140, respectively, the environmental sounds in these locations may exhibit substantially identical TV sounds, resulting in extraction of substantially the same sound features. Based on the sound features extracted from the two environmental sounds at locations 130 and 140, the server 180 then groups or clusters the client devices 110 and 120 as being in a same context. The server 180 may provide the grouping result (e.g., a similar client list) and/or context information (e.g., location, activities, etc. describing the client device environment) to the client devices 110 and 120. Based on the grouping result and/or context information, the server 180 can provide targeted services such as social networking services to the client devices 110 and 120. As used herein, the "context" of a particular client device may include an environment where the device is located, such as an office where the user is working, a restaurant where the user is having a lunch with his/her friends, and a transportation facility which the user uses for commuting. The "context" may also include activities in which the device or its user is involved, such as watching a particular TV program, listening to particular music, and playing soccer in a playground.

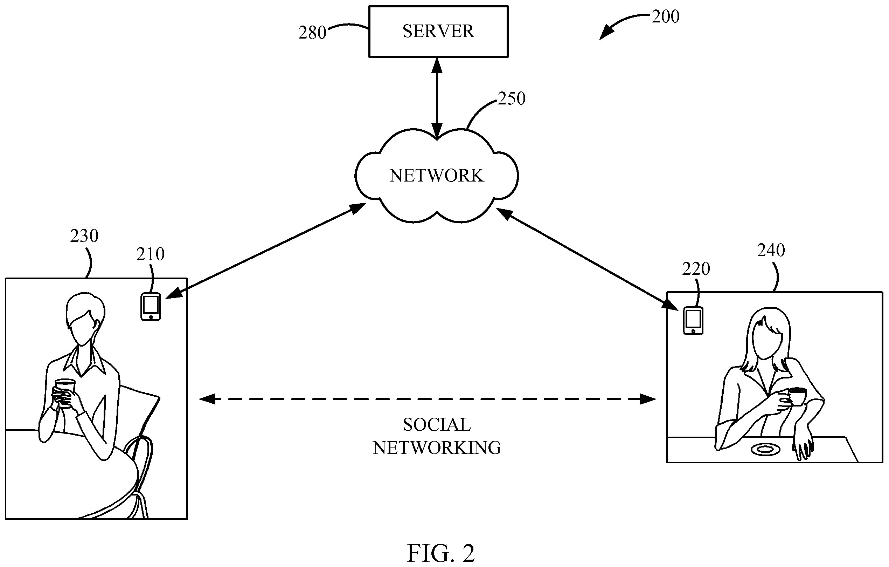

**FIG. 2** illustrates a schematic overview of a system 200 for grouping client devices 210 and 220 based on similar environmental sounds according to one embodiment. In this system, the client devices 210 and 220 capture environmental sounds at locations 230 and 240, respectively, and extract sound descriptors from the environmental sounds. As used herein, the term "sound descriptor" refers to any information describing or representing a sound and includes a sound feature extracted from an environmental sound, a sound class identifier indicative of a classification of a captured environmental sound, a histogram of sound components, and/or any other information obtained from the environmental sound. The client devices 210 and 220 send the sound descriptors to a server 280 via network 250. The server 280 determines a similarity between the two sound descriptors received from the client devices 110 and 120. For example, if users of the client devices 210 and 220 are drinking coffee in different coffee shops 230 and 240, respectively, the environmental sounds in these locations, although not exactly the same, may be similar in the types of captured sounds, thereby resulting in similar sound descriptors. Based on the similarity between the sound descriptors extracted from the two environmental sounds at locations 230 and 240, the server 280 then groups or clusters the client devices 210 and 220 as being in a similar context. As used herein, use of the phrase "in a similar context" means that devices, such as client devices 210 and 220, are generally involved in similar activities or environments regardless of their locations. The server 280 may provide the grouping result and/or context information to the client devices 210 and 220. Based on the grouping result and/or context information, the server 280 can provide targeted services to the client devices 210 and 220 in a similar context (e.g., similar activities) even though the environmental sounds from the client devices 210 and 220 are not exactly the same.

In some other embodiments, the server may compare sequences of environmental sounds of client devices to group or cluster the client devices. Each sequence of environmental sounds captured by a client device may include information on the life pattern of the client device user. For example, the client device may capture an environmental sound of 1 minute duration at every hour intervals in one of the week days. Each environmental sound captured at a particular time period may include certain sound features related to a particular environment or activity occurring at the particular time period, e.g., waking up, taking a bus for commuting, walking on the street, and working in an office. A sequence of such captured environmental sounds may be indicative of the life pattern of the client device user.

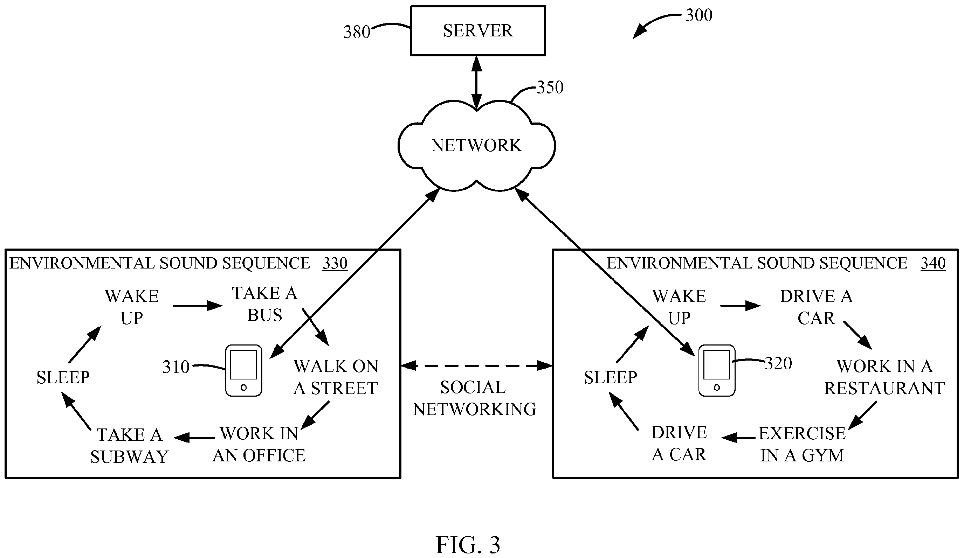

**FIG. 3** illustrates an overview diagram of a system 300 for grouping client devices 310 and 320 based on sound descriptors extracted from environmental sound sequences 330 and 340 over time according to one embodiment. The client devices 310 and 320 are configured to periodically capture environmental sounds representing environmental sound sequences 330 and 340, respectively, and send sound descriptors extracted from the environmental sound sequences to a server 380 through a network 350. For example, each of the client devices 310 and 320 may capture environmental sounds at predetermined time intervals or at predetermined points of time in a day. The server 380 determines a similarity between the two environmental sound sequences 330 and 340. If the users of the client devices 310 and 320 have similar life patterns, the two environmental sound sequences of the users may result in similar sound descriptors related to respective users' activities and environments. Based on the similarity of the sound descriptors, the server 380 groups or clusters the client devices 310 and 320 for users having a similar life pattern. The server 380 may provide the grouping result (e.g., a similar client list) and/or context information (e.g., location, activities, etc. describing the client device environment) to the client devices 310 and 320. Based on the grouping result and/or context information, the server 380 can provide targeted services such as social networking services to the client devices 310 and 320.

As described herein, a client device detects an environmental sound through a sound sensor such as a microphone. In one embodiment, the client device may be configured to detect an environmental sound at all times. Alternatively, the client device may be configured to detect an environmental sound at a predetermined time, predetermined intervals, or in response to a user's command.

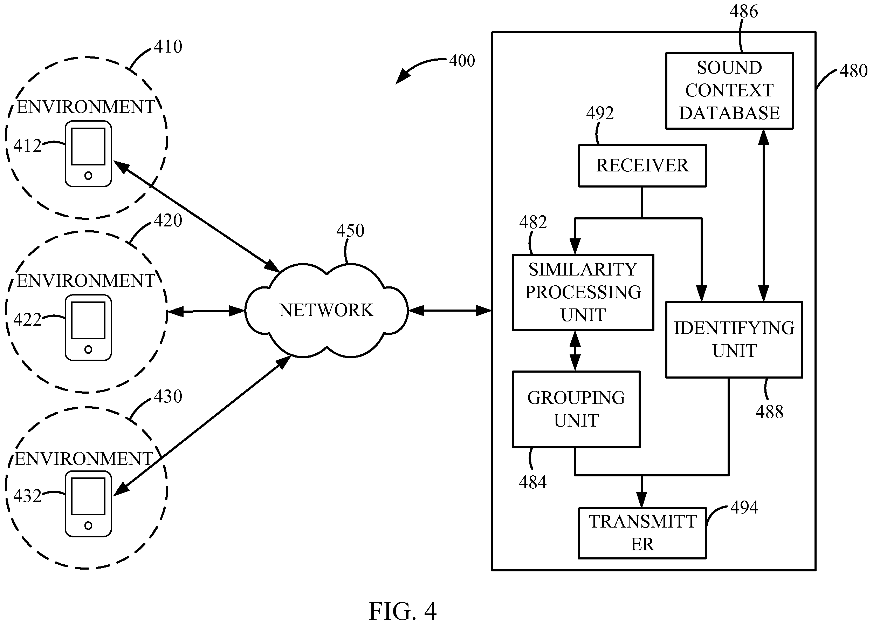

**FIG. 4** illustrates a system 400 for grouping client devices including a server 480 and a plurality of client devices 412, 422, and 432 according to one embodiment. In the system 400, the client devices 412, 422, and 432 are located in sound environments 410, 420, and 430. Each of the client devices 412, 422, and 432 may be operational in any type of network, as well as any combination of networks, including cellular networks, circuit switching networks, public switching networks, local area networks, wide area networks, wireless networks, and/or packet switching networks, etc.

In the exemplary system 400 of **FIG. 4,** the sound environments 410, 420, and 430 of the client devices 412, 422, and 432, respectively, may indicate the context of user activities at their respective locations. For example, the users of the client devices 412, 422, and 432 may be involved in activities such as watching a television program in a room, dining at a restaurant, driving a car on a road. If the activities or environments 410 and 420 of the client devices 412 and 422 are similar, the environmental sounds captured from the client devices 412 and 422 will typically be similar, because the environmental sound contains enough information about those activities and environments 410 and 420. Thus the environmental sounds may be used to determine whether the client devices 412 and 422 have a similar context. For example, both of the client devices 412 and 422 may be in restaurants or may be in conference rooms located in different buildings. In these cases, the client devices 412 and 422 can be considered to have a similar context.

On the other hand, if the sound environment 430 is not similar to the sound environments 410 and 420, the environmental sound from the sound environment 430 will generally be different from the environmental sounds from the sound environments 410 and 420. Thus, the context for the sound environment 430 will be different from that of the sound environments 410 and 420.

The server 480 is configured to compare sound descriptors from the client devices 412, 422, and 432 to identify a group of client devices in a similar context such as activities or environments. A receiver 492 in the server 480 receives packets containing sound descriptors from the client devices 412, 422, and 432. Each packet contains one or more sound descriptors from a client device. Although the server 480 is illustrated in a server-client system in **FIG. 4,** it may also be implemented as a client device in a peer-to-peer system including the client devices 412, 422, and 432. For example, one of the client devices 412, 422, and 432 may implement the functions of the server 480 to group users of client devices 412, 422, and 432 based on context similarity.

The server 480 includes a similarity processing unit 482, a grouping unit 484, and a transmitter 494. The similarity processing unit 482 is configured to determine a similarity value between each pair of the sound descriptors from the client devices 412, 422, and 432. For example, a similarity value between a sound descriptor received from the client device 412 and a sound descriptor received from the client device 422 and/or the client device 432 may be calculated.

Based on the similarity values from the similarity processing unit 482, the grouping unit 484 determines which of the client devices 412, 422, and 432 are in a similar context, and groups the client devices accordingly. If the client devices 412 and 422 are in a similar environment, the client devices 412 and 422 are identified as being in a similar context. As used herein, the term "similar context" may mean that devices, such as the client devices 412, 422, and 432, are generally involved in similar activities or located in similar environments regardless of whether they are geographically in the vicinity of one another or in geographically different locations. For example, if two users of the client devices 412 and 422 are watching a television program in different locations, despite their geographic dissimilarity, the two client devices may be considered as being in a similar context since the client deices may capture similar ambient sounds emanating from the television speakers.

After grouping the client devices, the grouping unit 484 may be configured to construct a similar client list for each client device from the similarity values or the grouped client devices. For each client device, the similar client list includes a list of other client devices identified to belong in the similar context group.

The transmitter 494 is configured to send similar client lists from the grouping unit 484 to one or more client devices 412, 422, and 432 in a packet format. In the case of a similar client list for the client device 412, the list may include the client device 422. In this case, the transmitter 494 sends the similar client list identifying the client device 422 to the client device 412. Similarly, a similar client list identifying the client device 412 may be sent to the client device 422.

Table 1 shows an exemplary packet format including data fields with specified lengths for conveying a similar client list.

[Table 1]

| Field Name | Packet Field |
|---|---|
| Packet Type | 4 bits |
| No. of Similar Clients | 8 bits |
| Similar User ID [1] | 64 bits |
| Similar User ID [2] | 64 bits |
| ⋮ | ⋮ |
| Similar User ID [L-1] | 64 bits |
| Similar User ID [L] | 64 bits |

As shown in the above table, a packet includes the packet fields listed on the right hand column. The field name on the left hand column is used for explanatory purposes and need not be included in the packet. In the packet format, the *Packet Type* field is 4 bits in length and contains information indicating the type of packet. The illustrated *Packet Type* may indicate that the packet contains a similar client list including similar user IDs. In some embodiments, the *Packet Type* can indicate that the packet contains other type of information such as sound histograms and any other associated information. The *Number of Similar Clients* field is 8 bits in length and is indicative of the number *L* of grouped client devices having a similar context. Reflecting the number L, the packet includes a *Similar User ID[i]* field for each of the grouped client devices. Specifically, the *Similar User ID[i]* field is 64 bits in length and contains a unique identifier for the *i*-th client device which is grouped with the client device receiving the packet. Although the packet format is illustrated as having the above described fields with specified sizes, it may also include any fields of suitable sizes such as a header, CRC information, etc. to facilitate communication through the network.

Alternatively or additionally, the server 480 includes a sound context database 486 and an identifying unit 488. The sound context database 486 includes one or more reference sound descriptors and related reference contexts. The reference sound descriptors are extracted from captured sounds of various known contexts (i.e., reference context) including sound activities and/or environments such as watching a certain TV program, dining at restaurants, commuting on a subway, or working in an office. The sound descriptors and the associated reference contexts are provided in the sound context database 486 for use in identifying a context of a client device as described below. The identifying unit 488 is configured to receive sound descriptors from the client devices 412, 422, and 432 through the receiver 492, retrieve reference sound descriptors from the sound context database 486, and determine contexts of the client devices 412, 422, and 432 by comparing the sound descriptors with the retrieved reference sound descriptors from the sound context database 486. For example, the identifying unit 488 compares the sound descriptor from the client device 412 and all of the retrieved reference sound descriptors from the sound context database 486, and identifies a reference sound descriptor having the greatest similarity to the sound descriptor of the client device 412. In this case, the client device 412 is determined to be in the context associated with the identified reference sound descriptor having the greatest similarity. If, for example, the sound descriptor of the client device 412 is most similar to a reference sound descriptor associated with a context of an office environment, the context of the client device 412 is determined to be an office environment. The context information is then sent to one or more client devices 412, 422, and 432 in a packet format via the transmitter 494.

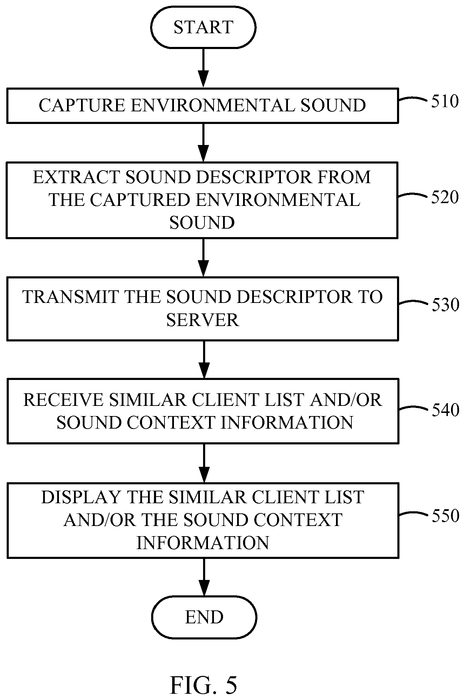

**FIG. 5** illustrates a flowchart of a method, performed by a client device, for use in grouping client devices in a similar context according to one embodiment. In this method, an environmental sound is sensed and captured through a sound sensor in the client device at 510. A sound descriptor is then extracted from the captured environmental sound at 520. As described above, the sound descriptor may refer to one or more sound features extracted from an environmental sound or a higher level information obtained from the sound features such as a histogram of sound components. Once the sound descriptor has been extracted, the extracted sound descriptor is transmitted to the server 480 at 530 for generating a similar client list and/or context information. For example, as shown in **FIG. 1,** the client devices 110 and 120 capture environmental sounds at locations 130 and 140, respectively, extract sound descriptors from the environmental sounds, and then send the sound descriptors to the server 180. The sound descriptor may include a sound feature. Based on the sound features of the sound descriptors, the server 480 can group the client devices 110 and 120 as being in a same context, because the environmental sounds in the locations 130 and 140 may exhibit substantially identical TV sounds, resulting in extraction of substantially the same sound features. The similar client list and/or context information is then received from the server 480 at 540, and displayed for the users at 550. It should be appreciated that the above method may be performed by any or all of the client devices 412, 422, and 432 for use in obtaining a similar client list and/or context information.

In one embodiment, a client device may be aware of the context of other client devices based on the context information received from the server 480. Further, when a client device receives the identification of other client devices as part of a similar client list, the client device may display the other client devices as sharing a common interest in the same activity or environment. The client device may utilize such information to provide services (e.g., social networking services, advertising, etc.) to the users of other client devices in a similar context.

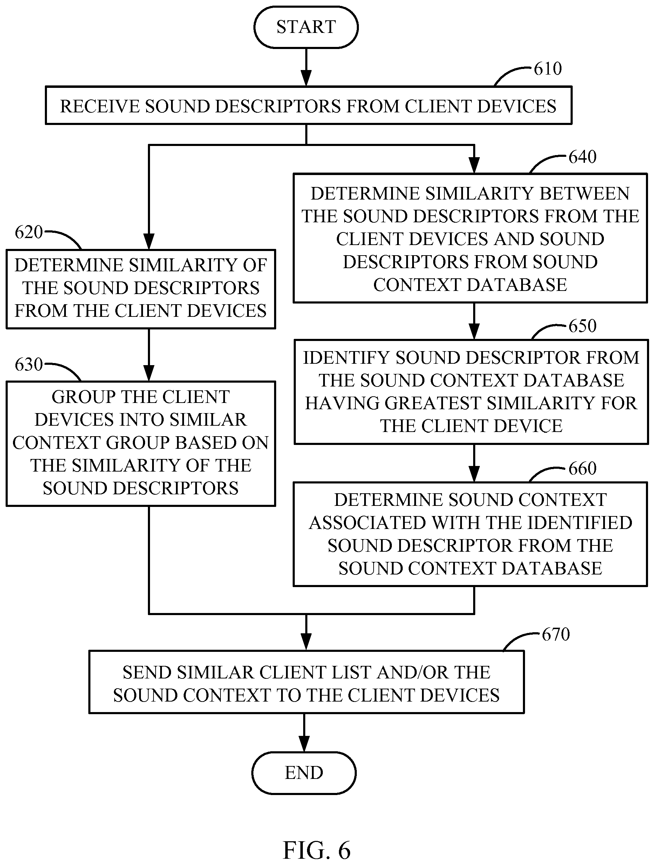

**FIG. 6** illustrates a flowchart of a method, performed by the server 480, for grouping client devices in a similar context and determining a context of each client device according to one embodiment. The receiver 492 of the server 480 receives packets containing sound descriptors from the client devices 412, 422, and 432, and provides the sound descriptors to the similarity processing unit 482 and the identifying unit 488 at 610. The similarity processing unit 482 determines similarity values between each pair of sound descriptors from the client devices 412, 422, and 432 at 620.

In one embodiment, a similarity value between sound descriptors from two client devices *a* and *b* is determined by calculating Euclidean distance between the two sound descriptors. In this embodiment, a larger Euclidean distance value means that the sound descriptors from two client devices *a* and *b* are less similar, while a smaller Euclidean distance means that the sound descriptors from two client devices *a* and *b* are more similar. Such a Euclidean distance may be calculated, e.g., according to the following equation:

$$Euclidean\ Distance = \sum_i |a[i] - b[i]|^2$$

where $a[i]$ indicates an $i$-th dimension value of a vector indicative of a sound descriptor from the client device $a$ and $b[i]$ indicates an $i$-th dimension value of a vector indicative of a sound descriptor from the client device $b$.

In another embodiment, when a sound descriptor is indicative of sound class identifiers which indicates classifications of a captured environmental sound, Euclidean distance calculating method may not be able to determine a similarity value. In this case, a similarity value between two client devices is determined by incrementing the similarity value by "1" when sound class IDs from the client devices are the same. On the other hand, when sound class IDs from the client devices are different, the similarity value is not incremented. This process is performed until all pairs of sound class IDs between two client devices are compared.

When a histogram is used as a sound descriptor, a similarity value between the histograms from the client devices may be determined in accordance with any of the following equations:

$$1)\ Correlation\ Distance\ (d(H_1, H_2)) \quad = \frac{\sum_I (H_1(I) - \overline{H}_1)(H_2(I) - \overline{H}_2)}{\sqrt{\sum_I (H_1(I) - \overline{H}_1)^2 \sum_I (H_2(I) - \overline{H}_2)^2}}$$

where

$$\overline{H}_K = \frac{1}{N} \sum_J H_K(J) \ ,$$

$N$ is a total number of histogram bins, $H_1$ is a first compared histogram, $H_2$ is a second compared histogram, and $I$ is an index of histogram bins.

$$2)\ Intersection\ Distance\ (d(H_1, H_2)) \quad = \sum_I \min(H_1(I), H_2(I))$$

$$3)\ Chi\text{-}Square\ Distance\ (d(H_1, H_2)) \quad = \sum_I \frac{(H_1(I) - H_2(I))^2}{H_1(I) + H_2(I)}$$

$$4)\ Bhattacharyya\ Distance\ (d(H_1, H_2)) \quad = \sqrt{1 - \frac{1}{\sqrt{\overline{H}_1 \overline{H}_2 N^2}} \sum_I \sqrt{H_1(I) \cdot H_2(I)}}$$

In these equations, the correlation and intersection distances represent similarity values, in which a higher value means that two histograms are more similar. The Chi-Square and Bhattacharyya distances indicate dissimilarity values, in which a higher value means that two histograms are less similar. When a sound descriptor is indicative of sequences of histograms, the sound descriptors from the client devices may be compared by matching each time period of the sequences. In one embodiment, the sound descriptors may be compared by employing DTW (dynamic time warping) techniques for determining similarity between two sequences which may vary in time. The grouping unit 484 of the server 480 identifies and groups client devices into a similar context group based on the similarity values between the sound descriptors at 630. For instance, if a similarity value between the sound descriptors from the client devices 412 and 422 exceeds a predetermined threshold, the grouping unit 484 adds the client device 422 to the similar client list for the client device 412. The transmitter 494 of the server 480 sends the similar client list and/or context information in a packet format to the client devices (e.g., client device 412) through the network 450 at 670. In addition to grouping client devices, the identifying unit 488 determines contexts associated with received sound descriptors. In particular, upon receiving sound descriptors from client devices, the identifying unit 488 retrieves reference sound descriptors from the sound context database 486 and determines similarity values between the sound descriptor from each client device and the reference sound descriptors from the sound context database 486 at 640. For example, if the sound context database 486 includes a hundred reference sound descriptors, a similarity value will be calculated between a received sound descriptor and each of the reference sound descriptors for a total of a hundred similarity values.

Among the similarity values generated between each received sound descriptor and the reference sound descriptors, the identifying unit 488 determines the greatest similarity value and identifies a reference sound descriptor associated with the greatest similarity value from the sound context database 486 at 650. Then, the identifying unit 488 determines a context associated with the identified sound descriptor from the sound context database 486 at 660. The context information is then sent to one or more client devices in a packet format via the transmitter 494 at 670. For example, if the client devices 412 and 422 are determined to be in the same context (e.g., in restaurants), the server 480 transmits the context information to either or both client devices 412 and 422.

In some embodiments, histograms of sound features or sound components extracted from captured environmental sounds are used as sound descriptors. In general, environmental sounds obtained in different contexts exhibit different distributions of sound features. That is, sound features extracted from an environmental sound obtained from a particular context may have a characteristic distribution of sound features. A histogram is indicative of a frequency distribution or occurrence of the sound features or sound components over time.

A histogram of sound features or sound components generated during a certain period of time in a particular context can show relatively long-term characteristics of the context. For example, in environmental sound clips, sounds such as music, a traffic noise, a tableware sound, a cash register sound, etc. generally occur at random points in time. Thus, an environmental sound captured for a relatively long period of time (e.g., 1 minute) typically provides a better context than an environmental sound captured for a shorter period of time (e.g., several seconds). Further, a particular context or environment generally exhibits specific sound features associated with the environmental sounds that can be used to identify the context or environment. For example, an environmental sound obtained in a crowded restaurant may be characterized by a greater number of sound features relating to tableware sounds, human voices, music, and the like, but a fewer number of sound features relating to outdoor sounds such as traffic sounds, wind noise, etc.

In one embodiment, a histogram of sound components may be constructed based on vector quantization of sound features extracted from environmental sounds. In vector quantization, a set of sound components are generated from training sound samples. The result of vector quantization (e.g., a set of sound components) may also be stored in the client device or the server in advance. After vector quantization, an input sound feature is mapped to the nearest cluster among the clusters, each of which represents a sound component. A histogram is generated by counting the number of input sound features mapped to the clusters by identifying a cluster having a nearest mean value.

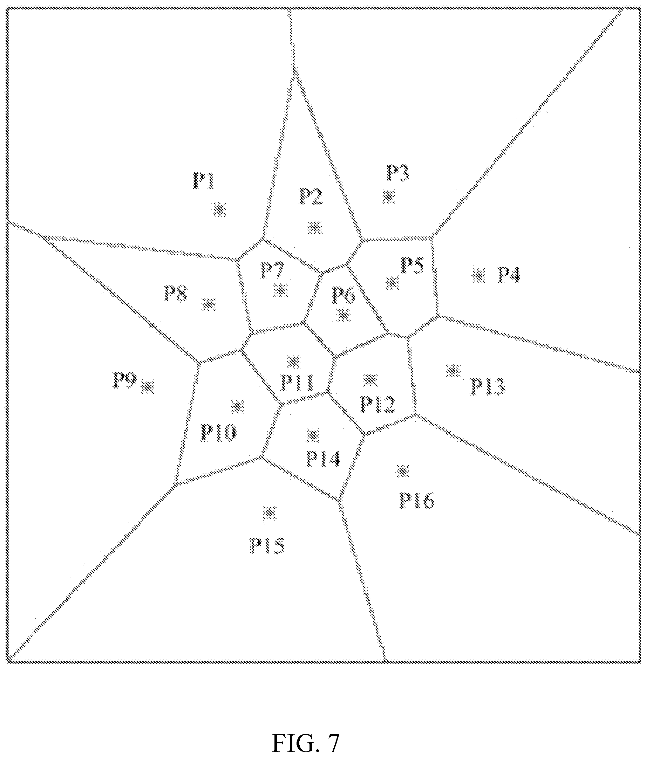

FIG. 7 illustrates an exemplary two-dimensional cluster distribution of training (e.g., learning) sound features clustered into sixteen clusters $P1$ to $P16$, in which each cluster is indicative of a sound component. The cluster distribution of training sound features may be constructed by extracting sound features (e.g., sound feature vectors) from known environmental sounds in a training set. As a training sound feature is constructed from a known environmental sound, Gaussian mixture modeling (GMM) may be used to place the training sound feature into a nearest cluster among the sixteen clusters $P1$ to $P16$, which are distributed in horizontal and vertical directions according to values of the sound feature. Since similar sound features tend to be located near one another in the cluster distribution, a Gaussian cluster of sound features is indicative of a certain type of environmental sound. For example, one cluster of sound features may typically relate to a particular tone of music, another cluster may relate to another tone of the music, and yet another cluster may relate to engine noise emanating from cars running on a road or a sound of keyboard typing. Once the desired sound features extracted from the training set have been clustered into desired number of sound components, each sound component is identified as a cluster index (e.g., identifier, label) such as $P1$ to $P16$, each of which has a mean value of the included sound features as indicated by an asterisk in **FIG. 7.** For sake of simplicity, the two-dimensional cluster distribution in **FIG. 7** is illustrated. However, a cluster distribution of any suitable dimensions may be employed for any suitable number of clusters. Various training algorithms known in the art may be employed to determine cluster indexes.

After a cluster distribution has been constructed, it is stored in each client device. When a sound is captured and corresponding sound features have been extracted in a client device, each input sound feature may be mapped into a cluster index by determining the cluster having the closest mean value to the input sound feature. That is, the cluster index for the input sound feature is identified. As sounds are captured and cluster indexes are generated in each client device, a histogram of sound components is constructed and updated.

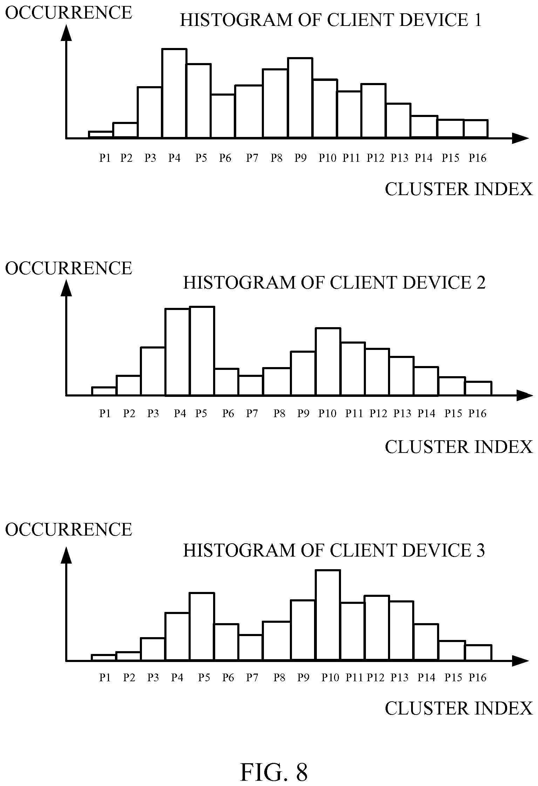

FIG. 8 illustrates exemplary histograms of environmental sounds generated at a plurality of client devices according to one embodiment. Each histogram shows the count of occurrence (e.g., the total number of occurrence) for all clusters $P1$ to $P16$. Along each horizontal axis of the histograms, indexes $P1$ to $P16$ represent clusters $P1$ to $P16$, respectively. The vertical axis indicates the number of sound features within each of the clusters $P1$ to $P16$. As cluster indexes of sound features are received in each client device, the histogram is updated by incrementing the count for each cluster associated with the cluster indexes.

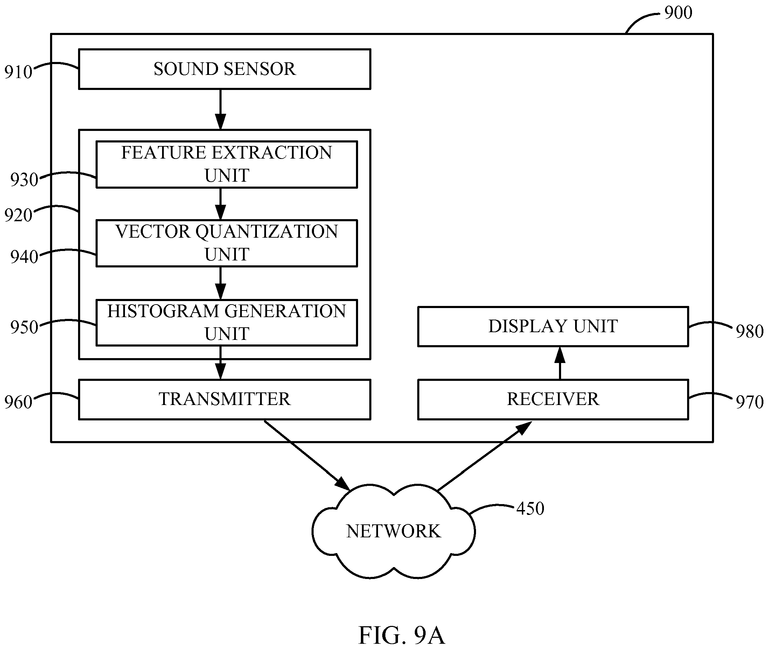

FIG. 9A illustrates a more detailed block diagram of an exemplary client device 900 according to one embodiment. The configuration of the client device 900 shown in **FIG. 9A** may be implemented in the client devices 110, 120, 210, 220, 310, 320, 412, 422, and 432. The client device 900 includes a sound sensor 910, a sound processor 920, a transmitter 960, a receiver 970, and a display unit 980.

The sound sensor 910 in the client device 900 includes one or more microphones or any other type of sound sensors used to receive, capture, measure, record, or convey any aspect of the environment sound of the client device 900. Such sound sensor 910 may be configured to use software and/or hardware of the client device 900. Further, the sound sensor 910 may utilize sound sensors provided in the general operation of the device 900 such as microphones used for a telephone call or video recording. Thus, some embodiments of the present disclosure may be practiced without requiring any modification of the sound sensor 910.

The sound processor 920 is configured to generate sound descriptors (e.g., histogram) from environmental sounds captured by the sound sensor 910, and includes a feature extraction unit 930, a vector quantization unit 940, and a histogram generation unit 950. The feature extraction unit 930 is configured to extract sound features from an environmental sound received from the sound sensor 910 by using suitable signal processing methods, including speech and audio coding, compression, recognition and analysis methods. For example, such methods include spectrum analysis, MFCC (Mel-frequency cepstral coefficients), LPC (linear predictive coding), and/or LSP (line spectral pair) techniques, which are well-known methods for audio fingerprinting, speech recognition or speech and audio coding. The following is an example of extracting MFCC features of an environmental sound. A frame including an environmental sound (e.g., raw sound signal) is multiplied by a windowing function, e.g., hamming window. The sound signal is Fourier transformed to the frequency domain, and then powers of spectrum are calculated. The powers of the spectrum are then mapped onto the mel scale, e.g., using triangular overlapping windows. Then, cepstral coefficients are calculated by taking a logarithm and/or a discrete cosine transform of the powers at each of the mel frequencies. Thus, a sound feature may be represented as a vector format (which may be referred to as "sound feature vector".) The vector quantization unit 940 of client device 900 performs vector quantization and determines a cluster index for each sound feature received from the feature extraction unit 930 based on a predetermined cluster distribution of sound components. That is, each sound feature from the feature extraction unit 930 is mapped to a cluster index of the cluster having a mean value closest to the sound feature. The cluster index is provided to the histogram generation unit 950, which generates and/or updates a histogram by counting the occurrence of the cluster index. The generated histogram including the counts for all clusters is transmitted to the server 480 in a packet format via the network 450.

Table 2 shows an exemplary packet format including data fields with specified lengths for conveying a histogram.

[Table 2]

| Field Name | Packet Field |
|---|---|
| Packet Type | 4 bits |
| User ID | 64 bits |
| No. of Cluster Indexes | 8 bits |
| Time Stamp | 64 bits |
| Occurrence of Cluster Index [1] | 4 bits |
| Occurrence of Cluster Index [2] | 4 bits |
| ⋮ | ⋮ |
| Occurrence of Cluster Index [N-1] | 4 bits |
| Occurrence of Cluster Index [N] | 4 bits |

As shown in the above table, a packet includes the packet fields listed on the right hand column. The field name on the left hand column explains the meaning of bits in the packet and need not be included in the packet. In the packet format, the *Packet Type* field is 4 bits in length and contains information indicating that the packet contains histogram information and any other associated information. The *User ID* field is 64 bits in length and is indicative of a unique identifier assigned to the client device 900. The *Number of Cluster Indexes* field is 8 bits in length and indicates the number $N$ of cluster indexes in a histogram, e.g., sixteen cluster indexes $P1$ to $P16$. The packet may include an optional data field indicative of *Time Stamp.* The *Time Stamp* field is 64 bits in length and is indicative of time when the environmental sound is captured for generating a histogram. The time may be provided by a clock circuit (not shown) of the client device 900.

The packet includes $N$ *occurrence of cluster index* fields. For an *i*-th *occurrence of cluster index* field (denoted as "*Occurrence of Cluster Index* [*i*]" in the above table), the *Occurrence of Cluster Index* [*i*] field is 4 bits in length and contains a count of input sound features which are mapped to a i-th cluster index. The number $N$ may be set to be 1 or greater as needed according to the capture duration of environmental sounds. If $N$ is greater than 1, the packet includes a histogram having a plurality of sound components.

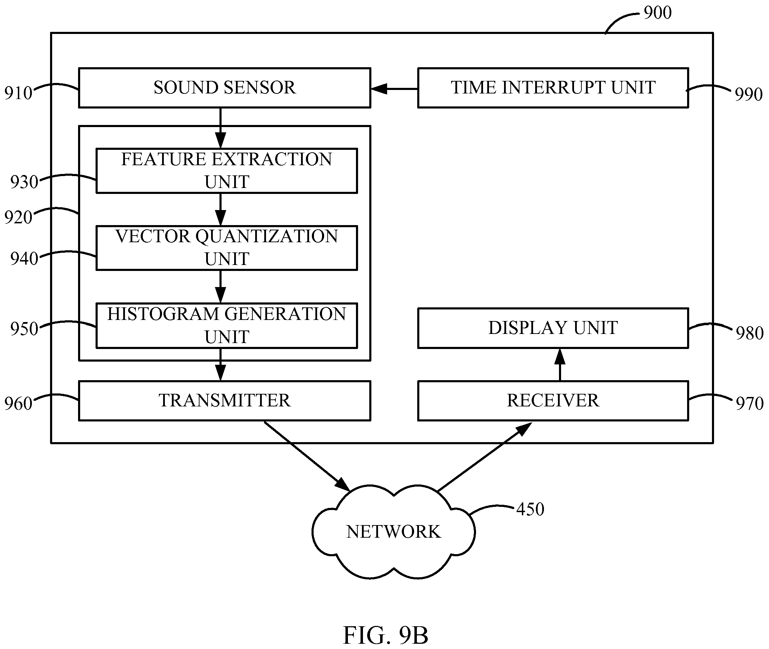

**FIG. 9B** illustrates a detailed block diagram of an exemplary client device 900 according to another embodiment. The configuration of the client device 900 shown in **FIG. 9B** may be implemented in the client devices 110, 120, 210, 220, 310, 320, 412, 422, and 432. The client device 900 includes a sound sensor 910, a sound processor 920, a transmitter 960, a receiver 970, a display unit 980, and a time interrupt unit 990. In this embodiment, a sequence of sound features or histograms obtained from one client device is generated based on environmental sounds captured at certain time intervals by the client device. For example, a sequence of environmental sounds may be captured for 1 minute at every hour in a day, but is not limited thereto. Such sequence of sound features or histograms is indicative of the client device user's life pattern over a sufficient period of time.

For capturing the sequence of environmental sounds, the client device 900 may include a time interrupt unit 990 to activate the sound sensor 910 at predetermined time intervals or time intervals requested by a user to capture an environmental sound for a period of time. For example, the time interrupt unit 990 may activate the sound sensor 910 at the beginning of every hour in a day to capture the environmental sound for one minute.

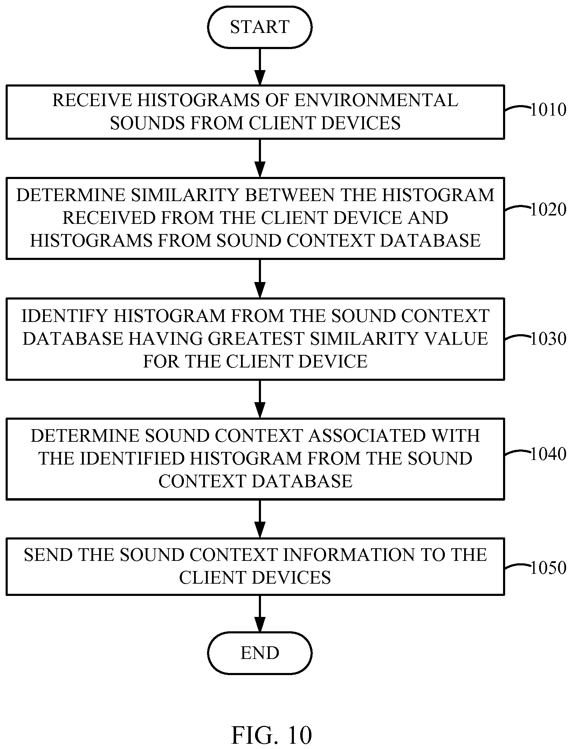

With reference to **FIGS. 9A and 9B,** the transmitter 960 transmits one or more sound descriptors in a packet format to the server 480. The receiver 970 of the client device 900 receives a similar client list and/or context information from the server 480 through the network 450 in a packet format. The display unit 980 is configured to display a similar client list and/or context information for the user. Although the client device 900 in **FIGS. 9A and 9B** includes the illustrated units, it may employ additional or alternative structures without departing from the scope of the present disclosure. **FIG. 10** illustrates a flowchart of a method, performed by the server 480, for determining contexts of client devices according to one embodiment. The receiver 492 of the server 480 receives histograms of environmental sounds from the client devices 412, 422, and 432 at 1010. The identifying unit 488 retrieves reference sound descriptors, which are reference histograms in this embodiment, from the sound context database 486 and determines similarity values between the histogram received from each client device and each of the reference histograms from the sound context database 486 at 1020. As described above, the sound context database 486 includes one or more reference histograms generated from captured sounds of various known contexts by vector quantization. For each client device, the identifying unit 488 determines the greatest similarity value and identifies a reference histogram associated with the greatest similarity value from the sound context database 486 at 1030. Then, the identifying unit 488 determines the context, for each client device, associated with the identified histogram from the sound context database 486 at 1040. Because each reference histogram in the sound context database 486 is indicative of a specific sound environment, the context of each client device can be determined by the identified histogram in the sound context database 486. The context information is then sent to one or more client devices in a packet format via the transmitter 494 at 1050.

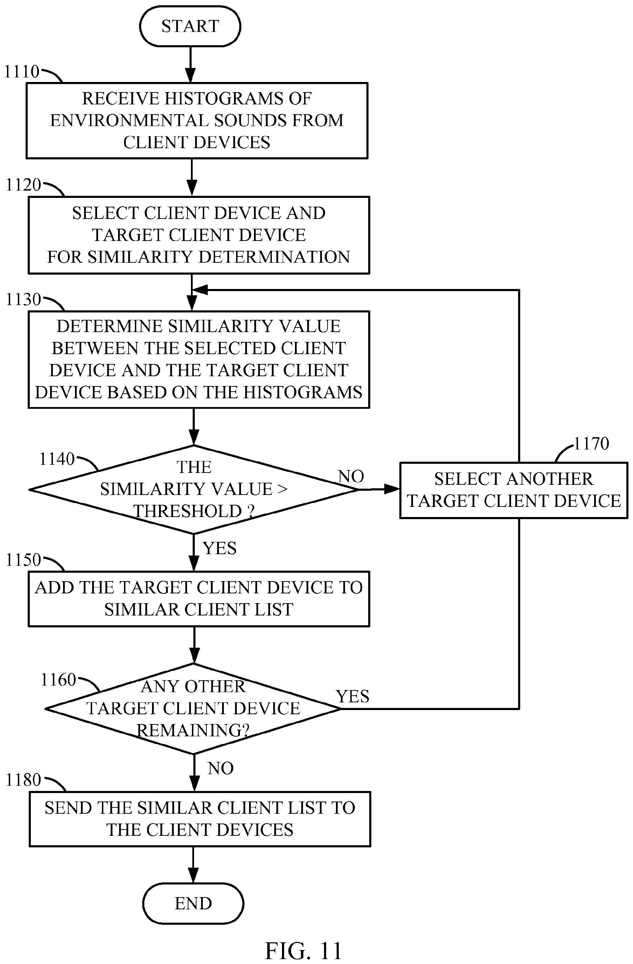

**FIG. 11** illustrates a flowchart of a method, performed by the server 480, for grouping client devices 412, 422, and 432 based on histograms according to one embodiment. Initially, the server 480 may request client devices 412, 422, and 432 to send a packet including one or more sound descriptors, which include a histogram generated based on the sound features extracted from environmental sounds. When the receiver 492 receives histograms in a packet format from the client devices, at 1110, the similarity processing unit 482 selects a client device (e.g., client device 412) and a target client device (e.g., client device 422) for determining similarity at 1120. Then, the similarity processing unit 482 determines a similarity value between the histograms from the client device 412 and the target client device 422 at 1130. Once the similarity value between the histograms from the client device 412 and the target client device 422 has been determined, the grouping unit 484 compares the similarity value with a predetermined threshold, at 1140, and adds the target client device 422 to a similar client list for the client device 412, at 1150, if the similarity value between the client devices 412 and 422 is determined to be greater than the threshold. The similar client list for the client device 412 may include a unique identifier (ID) assigned to the target client device 422.

If the similarity value is determined not to be greater than the threshold at 1140 or if another target client device is determined to exist at 1160, the similarity processing unit 482 proceeds to select another target client device (e.g., client device 432) at 1170 for similarity determination with the client device at 1130. The above operations at 1130 to 1160 of determining similarity, comparing the similarity with the threshold and adding the target client device to the similar client list are iterated until complete similar client lists are generated for the all client devices at 1160.

As a result, the complete similar client list for a particular client device (e.g., client device 412) may include client devices 422 and 432, which are in a group of similar context with the client device 412. The similar client list has a data format similar to the one shown in Table 1. When the complete the similar client list is generated, the transmitter 494 of the server 480 sends the similar client list associated with the client device 412 to the client device 412 in a packet format through the network 450 at 1180.

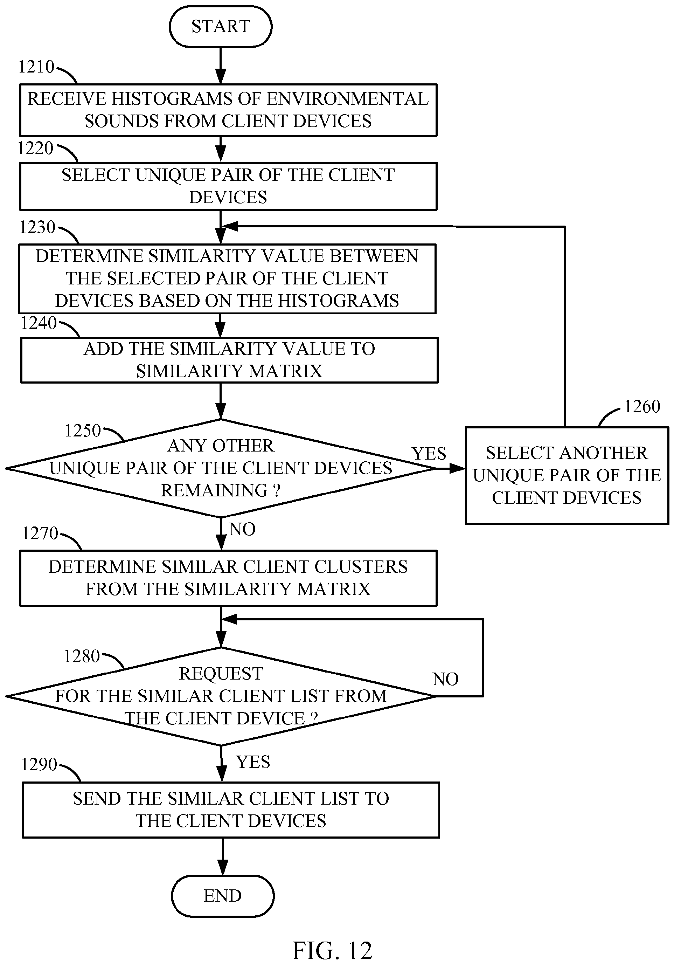

**FIG. 12** illustrates a flowchart of a method, performed by the server 480, for grouping client devices based on a similarity matrix derived from histograms according to another embodiment. Initially, the server 480 may send a request to client devices 412, 422, and 432 to send a packet including one or more sound descriptors, which include a histogram generated based on the sound features extracted from environmental sounds. When the receiver 492 receives histograms in a packet format from the client devices at 1210, the similarity processing unit 482 selects a unique pair of client devices 412 and 422 for determining similarity at 1220. Then, at 1230, the similarity processing unit 482 determines a similarity value between the selected pair of client devices 412 and 422. Once the similarity value between the client devices 412 and 422 has been determined, the similarity processing unit 482 adds the similarity value to a context similarity matrix (which may be simply referred to as "matrix" or "similarity matrix") at 1240.

In one embodiment, the similarity processing unit 482 calculates a similarity matrix as follows. Given a set of sound descriptors such as histograms obtained from the client devices 412, 422, and 432, the similarity matrix is defined as a matrix S where an element $S_{ij}$ is indicative of a measure of a similarity between sound descriptors of $i$-th and $j$-th client devices. In addition, unique identifiers assigned to $i$-th and $j$-th client devices are added to the element $S_{ij}$ along with the associated similarity value.

After adding the similarity value to the similarity matrix, it is determined whether any other unique pair of client devices exists at 1250. If so, the method proceeds back to 1230 after selecting another unique pair of client devices at 1260. However, if no other of unique pair of client devices is determined to exist at 1250, it means that similarity values have been determined for all unique pairs of client devices and the similarity matrix has been completed. In this case, the grouping unit 484 generates a similar client list by clustering similar client devices from the similarity matrix at 1270. The similar client list is indicative of grouping of client devices in a similar context. Although the similarity matrix is described to include the similarity values for all unique pairs of client devices in the above embodiment, in some embodiments, the similarity matrix may include similarity values for a part of all unique pairs of the client devices. In this case, the grouping unit 484 generates a similar client list by clustering similar client devices based on the similarity values for a subset of all unique pairs of the client devices.

In clustering similar client devices, spectral clustering techniques may be employed. One example of spectral clustering techniques is the Normalized Cuts algorithm. According to this algorithm, elements $S_{ij}$ of the similarity matrix S are partitioned (e.g., clustered) into two subsets ($S_1$, $S_2$) based on the eigenvector $v$ corresponding to second-smallest

$$D_{ij} = \sum_j S_{ij} \,.$$

eigenvalue of the Laplacian matrix $L = I - D^{-1/2}SD^{-1/2}$ of $S$, where $I$ is a unit matrix and $D$ is a diagonal matrix

Then, partitioning is done in various ways, such as by taking the median $m$ of the components in eigenvector $v$, and placing all elements of S whose component in $v$ is greater than $m$ in $S_1$ and the remaining ones in $S_2$. This algorithm is used for hierarchical clustering by repeatedly further partitioning the subsets in the manner as described above. Although in the present embodiment, spectral clustering techniques are employed in performing a clustering of the client devices, any other type of clustering techniques such as K-means clustering may be employed for this purpose.

Once a group of similar client devices based on the similarity matrix has been determined, the server 480 determines if there is a request from any of the client devices for a similar client list at 1280. If so, the transmitter 494 of the server 480 sends the list of similar client devices to the requesting client device through the network 450, at 1290. Such similar client list can be utilized to provide services among the client devices, visualize the group of client devices sharing interests in a similar activity, or provide targeted services to client devices in the similar client list.

In one embodiment, once a similarity matrix based on the histograms from the client devices has been generated, the server 480 may provide a visualization of context similarities among the client devices in the form of a virtual map. In generating such a visualization, any well known techniques such as MDS (multi-dimensional scaling) and PCA (principal component analysis) may be used. The transmitter 494 sends the similarity visualization information to the client devices. Such similarity visualization information is used in the client devices to display, for example, a two-dimensional virtual map of the client devices. On the two-dimensional virtual map, a distance between the client devices is indicative of a degree of context similarity between the client devices. In an alternative embodiment, the client device performs a visualization of context similarities of the client devices based on the list of similar client devices received from the server 480. The users of the client devices may browse the virtual map to find other users in a different location sharing a common interest.

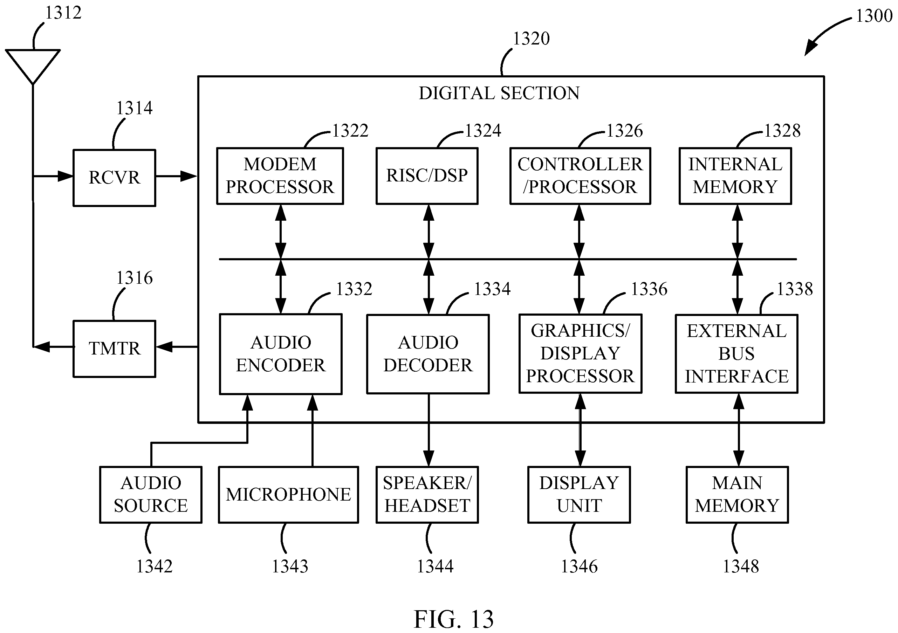

**FIG. 13** illustrates a block diagram of an exemplary client device in a wireless communication system according to one embodiment.

The client device 1300 may be a cellular phone, a terminal, a handset, a personal digital assistant (PDA), a wireless modem, a cordless phone, etc. The wireless communication system may be a Code Division Multiple Access (CDMA) system, a Global System for Mobile Communications (GSM) system, a Wideband CDMA (W-CDMA) system, a Long Term Evolution (LTE) system, a LTE Advanced system, etc.

The client device 1300 is capable of providing bidirectional communication via a receive path and a transmit path. On the receive path, signals transmitted by base stations are received by an antenna 1312 and are provided to a receiver (RCVR) 1314. The receiver 1314 conditions and digitizes the received signal and provides the conditioned and digitized signal to a digital section 1320 for further processing. On the transmit path, a transmitter (TMTR) receives data to be transmitted from a digital section 1320, processes and conditions the data, and generates a modulated signal, which is transmitted via the antenna 1312 to the base stations. The receiver 1314 and the transmitter 1316 is part of a transceiver that supports CDMA, GSM, W-CDMA, LTE, LTE Advanced, etc.

The digital section 1320 includes various processing, interface, and memory units such as, for example, a modem processor 1322, a reduced instruction set computer/ digital signal processor (RISC/DSP) 1324, a controller/processor 1326, an internal memory 1328, a generalized audio encoder 1332, a generalized audio decoder 1334, a graphics/display processor 1336, and an external bus interface (EBI) 1338. The modem processor 1322 performs processing for data transmission and reception, e.g., encoding, modulation, demodulation, and decoding. The RISC/DSP 1324 performs general and specialized processing for the wireless device 1300. The controller/processor 1326 controls the operation of various processing and interface units within the digital section 1320. The internal memory 1328 stores data and/or instructions for various units within the digital section 1320.

The generalized audio encoder 1332 performs encoding for input signals from an audio source 1342, a microphone 1343, etc. The generalized audio decoder 1334 performs decoding for coded audio data and provides output signals to a speaker/headset 1344. It should be noted that the generalized audio encoder 1332 and the generalized audio decoder 1334 are not necessarily required for interface with the audio source, the microphone 1343 and the speaker/headset 1344, and thus are omitted in the mobile device 1300. The graphics/display processor 1336 performs processing for graphics, videos, images, and texts, which is presented to a display unit 1346. The EBI 1338 facilitates transfer of data between the digital section 1320 and a main memory 1348. The digital section 1320 is implemented with one or more processors, DSPs, microprocessors, RISCs, etc. The digital section 1320 is also fabricated on one or more application specific integrated circuits (ASICs) and/or some other type of integrated circuits (ICs).

In general, any device described herein is indicative of various types of devices, such as a wireless phone, a cellular phone, a laptop computer, a wireless multimedia device, a wireless communication personal computer (PC) card, a PDA, an external or internal modem, a device that communicates through a wireless channel, etc. A device may have various names, such as access terminal (AT), access unit, subscriber unit, mobile station, client device, mobile unit, mobile phone, mobile, remote station, remote terminal, remote unit, user device, user equipment, handheld device, etc. Any device described herein may have a memory for storing instructions and data, as well as hardware, software, firmware, or combinations thereof.

The context determining and grouping techniques described herein are implemented by various means. For example, these techniques are implemented in hardware, firmware, software, or a combination thereof. Those ordinary skills in the art would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, the various illustrative components, blocks, modules, circuits, and steps have been described above generally in terms of their functionality. Whether such functionality is implemented as hardware or software depends upon the particular application and design constraints imposed on the overall system. Skilled artisans implement the described functionality in varying ways for each particular application, but such implementation decisions should not be interpreted as causing a departure from the scope of the present disclosure.

For a hardware implementation, the processing units used to perform the techniques is implemented within one or more ASICs, DSPs, digital signal processing devices (DSPDs), programmable logic devices (PLDs), field programmable gate arrays (FPGAs), processors, controllers, micro-controllers, microprocessors, electronic devices, other electronic units designed to perform the functions described herein, a computer, or a combination thereof.

Thus, the various illustrative logical blocks, modules, and circuits described in connection with the disclosure herein are implemented or performed with a general-purpose processor, a DSP, an ASIC, a FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor is also implemented as a combination of computing devices, e.g., a combination of a DSP and a microprocessor, a plurality of microprocessors, one or more microprocessors in conjunction with a DSP core, or any other such configuration.

If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein are applied to other variations without departing from the scope of the disclosure. Thus, the disclosure is not intended to be limited to the examples described herein but is to be accorded the widest scope consistent with the principles and novel features disclosed herein.

Although exemplary implementations are referred to utilizing aspects of the presently disclosed subject matter in the context of one or more stand-alone computer systems, the subject matter is not so limited, but rather may be implemented in connection with any computing environment, such as a network or distributed computing environment. Still further, aspects of the presently disclosed subject matter may be implemented in or across a plurality of processing chips or devices, and storage may similarly be effected across a plurality of devices. Such devices include PCs, network servers, and handheld devices.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method performed by a server for grouping a plurality of client devices, the method comprising:

   receiving (610) sound descriptors from the plurality of client devices, wherein the sound descriptors are extracted from environmental sounds by the client devices at predetermined time intervals;
   determining (620) a similarity of the sound descriptors, wherein the similarity includes a similarity value between the sound descriptors; and
   grouping (630) the plurality of client devices into at least one similar context group based on the similarity of the sound descriptors and independent of a device location of each client device of the plurality of client devices, wherein the plurality of client devices are grouped into the at least one similar context group when the similarity value exceeds a predetermined value;
   **characterised by** constructing a similar client list for one of the client devices in one of the similar context groups, wherein the similar client list includes a list of the other client devices in one of the similar context groups having similar sound descriptors captured at the predetermined time intervals; and
   transmitting the similar client list to at least one of the client devices.

2. The method of Claim 1, wherein each of the sound descriptors includes a number of occurrences of sound components.

3. The method of Claim 1, wherein determining the similarity includes comparing the sound descriptors.

4. The method of Claim 1, wherein determining the similarity of the sound descriptors comprises comparing the sound descriptors with reference sound descriptors retrieved from a sound context database.

5. The method of Claim 1, further comprising generating a matrix of similarity values, wherein a similarity value in the matrix is generated by comparing at least one pair of the sound descriptors, and wherein grouping the plurality of client devices includes grouping the plurality of client devices into the at least one similar context group based on the matrix.

6. The method of Claim 1, wherein:

   reference sound descriptors are extracted from captured sounds in a reference context; and
   the method further comprises identifying a context of at least one of the client devices by comparing the sound descriptor received from the at least one of the client devices and the reference sound descriptors.

7. A server for grouping a plurality of client devices, the server comprising:

   means for receiving (492) sound descriptors from the plurality of client devices, wherein the sound descriptors are extracted from environmental sounds by the client devices at predetermined time intervals;
   means for determining (482) a similarity of the sound descriptors, wherein the similarity includes a similarity value between the sound descriptors; and
   means for grouping (484) the plurality of client devices into at least one similar context group based on the similarity of the sound descriptors and independent of a device location of each client device of the plurality of client devices, wherein the plurality of client devices are grouped into the at least one similar context group when the similarity value exceeds a predetermined value;

**characterised by** means for constructing a similar client list for one of the client

devices in one of the similar context groups, wherein the similar client list includes a list of the other client devices in one of the similar context groups having similar sound descriptors captured at the predetermined time intervals; and

means for transmitting the similar client list to at least one of the client devices.

8. The server of Claim 7, wherein each of the sound descriptors includes a number of occurrences of sound components.

9. The server of Claim 8, wherein the means for determining the similarity is configured to compare the sound descriptors.

10. The server of Claim 7, wherein the means for determining the similarity of the sound descriptors compares the sound descriptors with reference sound descriptors retrieved from a sound context database.

11. The server of Claim 7, wherein the means for grouping is further configured to generate a matrix of similarity values, wherein a similarity value in the matrix is generated by comparing at least one pair of the sound descriptors, and wherein the means for grouping is configured to group the plurality of client devices into the at least one similar context group based on the matrix.

12. The server of Claim 7, wherein:

reference sound descriptors are extracted from captured sounds in a reference context; and
the server further comprises means for identifying a context of at least one of the client devices by comparing the sound descriptor received from the at least one of the client devices and the reference sound descriptors.

13. A system comprising client device and a server, comprising at the client device:

means for capturing (510) an environmental sound;
means for extracting (520) a sound descriptor from the environmental sound by the client devices at predetermined time intervals;
means for transmitting (530) the sound descriptor to a server configured to group a plurality of client devices into at least one similar context group based on a similarity of sound descriptors received from the plurality of client devices, wherein the similarity includes a similarity value between the sound descriptors; and
**characterised by** means at the client device for receiving (540), from the server, information indicative of the plurality of client devices in the similar context group independent of whether each client device of the plurality of client devices are in a common location, wherein the plurality of client devices are grouped at the server into the at least one similar context group when the similarity value exceeds a predetermined value and the information comprises a similar client list for one of the client devices in one of the similar context groups having similar sound descriptors captured at the predetermined time intervals.

14. The system of Claim 13, wherein each of the sound descriptors includes a number of occurrences of sound components.

15. A non-transitory computer-readable storage medium storing instructions for grouping a plurality of client devices, the instructions causing a processor to perform a method of any of claims 1 to 6.


**Patentansprüche**

1. Verfahren, das durch einen Server zum Gruppieren mehrerer Client-Vorrichtungen ausgeführt wird, wobei das Verfahren Folgendes umfasst:

Empfangen (610) von Klangdeskriptoren von den mehreren Client-Vorrichtungen, wobei die Klangdeskriptoren durch die Client-Vorrichtungen in zuvor bestimmten Zeitintervallen aus Umgebungsklängen extrahiert werden;
Bestimmen (620) einer Ähnlichkeit der Klangdeskriptoren, wobei die Ähnlichkeit einen Ähnlichkeitswert zwischen den Klangdeskriptoren beinhaltet; und

Gruppieren (630) der mehreren Client-Vorrichtungen in wenigstens eine ähnliche Kontextgruppe basierend auf der Ähnlichkeit der Klangdeskriptoren und unabhängig von einem Vorrichtungsort jeder Client-Vorrichtung der mehreren Client-Vorrichtungen, wobei die mehreren Client-Vorrichtungen in wenigstens eine ähnliche Kontextgruppe gruppiert werden, wenn der Ähnlichkeitswert einen zuvor bestimmten Wert überschreitet;
**gekennzeichnet durch** Erstellen einer ähnlichen Client-Liste für eine der Client-Vorrichtungen in einer der ähnlichen Kontextgruppen, wobei die ähnliche Client-Liste eine Liste der anderen Client-Vorrichtungen in einer der ähnlichen Kontextgruppen, die ähnliche Klangdeskriptoren, die zu den zuvor bestimmten Zeitintervallen erfasst wurden, aufweist, beinhaltet; und
Übertragen der ähnlichen Client-Liste an wenigstens eine der Client-Vorrichtungen.

2. Verfahren nach Anspruch 1, wobei jeder der Klangdeskriptoren eine Anzahl von Vorkommen von Klangkomponenten beinhaltet.

3. Verfahren nach Anspruch 1, wobei das Bestimmen der Ähnlichkeit ein Vergleichen der Klangdeskriptoren beinhaltet.

4. Verfahren nach Anspruch 1, wobei das Bestimmen der Ähnlichkeit der Klangdeskriptoren das Vergleichen der Klangdeskriptoren mit Referenzklangdeskriptoren, die aus einer Klangkontextdatenbank abgerufen werden, umfasst.

5. Verfahren nach Anspruch 1, ferner umfassend ein Erzeugen einer Matrix von Ähnlichkeitswerten, wobei ein Ähnlichkeitswert in der Matrix durch Vergleichen wenigstens eines Paares von Klangdeskriptoren erzeugt wird, und wobei das Gruppieren der mehreren Client-Vorrichtungen das Gruppieren der mehreren Client-Vorrichtungen in die wenigstens eine ähnliche Kontextgruppe basierend auf der Matrix beinhaltet.

6. Verfahren nach Anspruch 1, wobei:

   Referenzklangdeskriptoren aus erfassten Klängen in einem Referenzkontext extrahiert werden; und
   das Verfahren ferner ein Identifizieren eines Kontexts von wenigstens einer der Client-Vorrichtungen durch Vergleichen des von der wenigstens einen der Client-Vorrichtungen empfangenen Klangdeskriptoren und der Referenzklangdeskriptoren umfasst.

7. Server zum Gruppieren mehrerer Client-Vorrichtungen, wobei der Server Folgendes umfasst:

   Mittel zum Empfangen (492) von Klangdeskriptoren von den mehreren Client-Vorrichtungen, wobei die Klangdeskriptoren durch die Client-Vorrichtungen in zuvor bestimmten Zeitintervallen aus Umgebungsklängen extrahiert werden;
   Mittel zum Bestimmen (482) einer Ähnlichkeit der Klangdeskriptoren, wobei die Ähnlichkeit einen Ähnlichkeitswert zwischen den Klangdeskriptoren beinhaltet; und
   Mittel zum Gruppieren (484) der mehreren Client-Vorrichtungen in wenigstens eine ähnliche Kontextgruppe basierend auf der Ähnlichkeit der Klangdeskriptoren und unabhängig von einem Vorrichtungsort jeder Client-Vorrichtung der mehreren Client-Vorrichtungen, wobei die mehreren Client-Vorrichtungen in wenigstens eine ähnliche Kontextgruppe gruppiert werden, wenn der Ähnlichkeitswert einen zuvor bestimmten Wert überschreitet;
   **gekennzeichnet durch** Mittel zum Erstellen einer ähnlichen Client-Liste für eine der Client-Vorrichtungen in einer der ähnlichen Kontextgruppen, wobei die ähnliche Client-Liste eine Liste der anderen Client-Vorrichtungen in einer der ähnlichen Kontextgruppen, die ähnliche Klangdeskriptoren, die zu den zuvor bestimmten Zeitintervallen erfasst wurden, aufweist, beinhaltet; und
   Mittel zum Übertragen der ähnlichen Client-Liste an wenigstens eine der Client-Vorrichtungen.

8. Server nach Anspruch 7, wobei jeder der Klangdeskriptoren eine Anzahl von Vorkommen von Klangkomponenten beinhaltet.

9. Server nach Anspruch 8, wobei das Mittel zum Bestimmen der Ähnlichkeit konfiguriert ist, um die Klangdeskriptoren zu vergleichen.

10. Server nach Anspruch 7, wobei das Mittel zum Bestimmen der Ähnlichkeit der Klangdeskriptoren die Klangdeskriptoren mit Referenzklangdeskriptoren, die aus einer Klangkontextdatenbank abgerufen werden, vergleicht.

**11.** Server nach Anspruch 7, wobei das Mittel zum Gruppieren ferner konfiguriert ist, um eine Matrix von Ähnlichkeitswerten zu erzeugen, wobei ein Ähnlichkeitswert in der Matrix durch Vergleichen wenigstens eines Paares von Klangdeskriptoren erzeugt wird, und wobei das Mittel zum Gruppieren konfiguriert ist, um die mehreren Client-Vorrichtungen in wenigstens eine ähnliche Kontextgruppe basierend auf der Matrix zu gruppieren.

**12.** Server nach Anspruch 7, wobei:

Referenzklangdeskriptoren aus erfassten Klängen in einem Referenzkontext extrahiert werden; und
der Server ferner Mittel zum Identifizieren eines Kontexts von wenigstens einer der Client-Vorrichtungen durch Vergleichen des von der wenigstens einen der Client-Vorrichtungen empfangenen Klangdeskriptoren und der Referenzklangdeskriptoren umfasst.

**13.** System, umfassend eine Client-Vorrichtung und einen Server, die an der Client-Vorrichtung Folgendes umfasst:

Mittel zum Erfassen (510) eines Umgebungsklanges;
Mittel zum Extrahieren (520) eines Klangdeskriptors durch die Client-Vorrichtungen in zuvor bestimmten Zeitintervallen aus dem Umgebungsklang;
Mittel zum Übertragen (530) des Klangdeskriptors an einen Server, der konfiguriert ist, um mehrere Client-Vorrichtungen in wenigstens eine ähnliche Kontextgruppe, basierend auf einer Ähnlichkeit von Klangdeskriptoren, die von den mehreren Client-Vorrichtungen empfangen werden, zu gruppieren, wobei die Ähnlichkeit einen Ähnlichkeitswert zwischen den Klangdeskriptoren beinhaltet; und
**gekennzeichnet durch** Mittel an der Client-Vorrichtung zum Empfangen (540), von dem Server, von Informationen, die die mehreren Client-Vorrichtungen in der ähnlichen Kontextgruppe anzeigen, unabhängig davon, ob sich jede Client-Vorrichtung der mehreren Client-Vorrichtungen an einem gemeinsamen Ort befindet, wobei die mehreren Client-Vorrichtungen an dem Server in wenigstens eine ähnliche Kontextgruppe gruppiert werden, wenn der Ähnlichkeitswert einen zuvor bestimmten Wert überschreitet und die Informationen eine ähnliche Client-Liste für eine der Client-Vorrichtungen in einer der ähnlichen Kontextgruppen mit ähnlichen Klangdeskriptoren, die in den zuvor bestimmten Zeitintervallen erfasst wurden, umfasst.

**14.** System nach Anspruch 13, wobei jeder der Klangdeskriptoren eine Anzahl von Vorkommen von Klangkomponenten beinhaltet.

**15.** Nicht flüchtiges computerlesbares Speichermedium, das Anweisungen zum Gruppieren mehrerer Client-Vorrichtungen speichert, wobei die Anweisungen einen Prozessor veranlassen, ein Verfahren nach einem der Ansprüche 1 bis 6 auszuführen.

**Revendications**

**1.** Procédé exécuté par un serveur destiné à grouper une pluralité de dispositifs client, le procédé comprenant :

la réception (610) de descripteurs sonores de la pluralité de dispositifs client, les descripteurs sonores étant extraits de sons ambiants par les dispositifs client à des intervalles de temps prédéterminés ;
le fait de déterminer (620) une similarité des descripteurs sonores, la similarité comportant une valeur de similarité entre les descripteurs sonores ; et
le groupement (630) de la pluralité de dispositifs client en au moins un groupe de contextes similaires sur la base de la similarité des descripteurs sonores et indépendamment de l'emplacement d'un dispositif de chaque dispositif client de la pluralité de dispositifs client, la pluralité de dispositifs client étant groupés en l'au moins un groupe de contextes similaires lorsque la valeur de similarité dépasse une valeur prédéterminée ;
**caractérisé par** la construction d'une liste de clients similaires destinée à l'un des dispositifs client dans l'un des groupes de contextes similaires, la liste de clients similaires comportant une liste des autres dispositifs client dans un des groupes de contextes similaires pourvus de descripteurs sonores similaires capturés à des intervalles de temps prédéterminés ; et
la transmission de la liste de clients similaires à au moins un des dispositifs client.

**2.** Procédé selon la revendication 1, dans lequel chacun des descripteurs sonores comporte un certain nombre d'occurrences de composants sonores.

3. Procédé selon la revendication 1, dans lequel le fait de déterminer la similarité comporte la comparaison des descripteurs sonores.

4. Procédé selon la revendication 1, dans lequel le fait de déterminer la similarité des descripteurs sonores comprend la comparaison des descripteurs sonores avec des descripteurs sonores de référence récupérés à partir d'une base de données de contexte sonore.

5. Procédé selon la revendication 1, comprenant en outre la génération d'une matrice de valeurs de similarité, une valeur de similarité dans la matrice étant générée en comparant au moins une paire des descripteurs sonores, et le groupement de la pluralité de dispositifs client comportant le groupement de la pluralité de dispositifs client dans l'au moins un groupe de contextes similaires sur la base de la matrice.

6. Procédé selon la revendication 1, dans lequel :

   les descripteurs sonores de référence sont extraits des sons capturés dans un contexte de référence ; et
   le procédé comprend en outre l'identification d'un contexte d'au moins un des dispositifs client en comparant le descripteur sonore reçu à l'au moins un des dispositifs client et les descripteurs sonores de référence.

7. Serveur destiné à grouper une pluralité de dispositifs client, le serveur comprenant :

   un moyen destiné à recevoir (492) des descripteurs sonores de la pluralité de dispositifs client, les descripteurs sonores étant extraits des sons ambiants par les dispositifs client à des intervalles de temps prédéterminés ;
   un moyen destiné à déterminer (482) une similarité des descripteurs sonores, la similarité comportant une valeur de similarité entre les descripteurs sonores ; et
   un moyen destiné à grouper (484) la pluralité de dispositifs client en au moins un groupe de contextes similaires sur la base de la similarité des descripteurs sonores et indépendamment d'un emplacement de dispositif de chaque dispositif client de la pluralité de dispositifs client, la pluralité de dispositifs client étant groupés dans l'au moins un groupe de contextes similaires lorsque la valeur de similarité dépasse une valeur prédéterminée ; **caractérisé par** un moyen destiné à construire une liste de clients similaires pour l'un des dispositifs client dans un des groupes de contextes similaires, la liste de clients similaire comportant une liste des autres dispositifs client dans l'un des groupes de contextes similaires pourvus de descripteurs sonores similaires capturés au niveau des intervalles de temps prédéterminés ; et
   un moyen destiné à transmettre la liste de clients similaire à au moins un des dispositifs client.

8. Serveur selon la revendication 7, dans lequel chacun des descripteurs sonores comporte un certain nombre d'occurrences de composants sonores.

9. Serveur selon la revendication 8, dans lequel le moyen destiné à déterminer la similarité est configuré pour comparer les descripteurs sonores.

10. Serveur selon la revendication 7, dans lequel le moyen destiné à déterminer la similarité des descripteurs sonores compare les descripteurs sonores avec des descripteurs sonores de référence extraits d'une base de données de contextes sonores.

11. Serveur selon la revendication 7, dans lequel le moyen destiné à grouper est en outre configuré pour générer une matrice de valeurs de similarité, une valeur de similarité dans la matrice étant générée en comparant au moins une paire des descripteurs sonores, et le moyen destiné à grouper étant configuré pour grouper la pluralité de dispositifs client dans l'au moins un groupe de contextes similaires sur la base de la matrice.

12. Serveur selon la revendication 7, dans lequel :

   les descripteurs sonores de référence sont extraits des sons capturés dans un contexte de référence ; et
   le serveur comprend en outre un moyen destiné à identifier un contexte d'au moins un des dispositifs client en comparant le descripteur sonore reçu de l'au moins un des dispositifs client et les descripteurs sonores de référence.

13. Système comprenant un dispositif client et un serveur, comprenant au niveau du dispositif client :

un moyen destiné à capturer (510) un son ambiant ;

un moyen destiné à extraire (520) un descripteur sonore du son ambiant par les dispositifs client à des intervalles de temps prédéterminés ;

un moyen destiné à transmettre (530) le descripteur sonore à un serveur configuré pour grouper une pluralité de dispositifs client en au moins un groupe de contexte similaire sur la base d'une similarité de descripteurs sonores reçus de la pluralité de dispositifs client, la similarité comportant une valeur de similarité entre les descripteurs sonores ; et

**caractérisé par** un moyen au niveau du dispositif client destiné à recevoir (540), depuis le serveur, des informations indiquant la pluralité de dispositifs client dans le groupe de contextes similaires indépendamment du fait que chaque dispositif client de la pluralité de dispositifs client se trouve dans un emplacement commun, la pluralité de dispositifs client étant groupés dans le serveur dans l'au moins un groupe de contextes similaires lorsque la valeur de similarité dépasse une valeur prédéterminée et les informations comprenant une liste de clients similaire pour un des dispositifs client dans l'un des groupes de contextes similaires pourvus de descripteurs sonores similaires capturés à des intervalles de temps prédéterminés.

14. Système selon la revendication 13, dans lequel chacun des descripteurs sonores comporte un certain nombre d'occurrences de composants sonores.

15. Support de stockage non transitoire lisible par ordinateur stockant des instructions destinées à grouper une pluralité de dispositifs client, les instructions amenant un processeur à exécuter un procédé selon l'une quelconque des revendications 1 à 6.

FIG. 1

FIG. 2

FIG. 3

FIG. 4

START

CAPTURE ENVIRONMENTAL SOUND — 510

EXTRACT SOUND DESCRIPTOR FROM THE CAPTURED ENVIRONMENTAL SOUND — 520

TRANSMIT THE SOUND DESCRIPTOR TO SERVER — 530

RECEIVE SIMILAR CLIENT LIST AND/OR SOUND CONTEXT INFORMATION — 540

DISPLAY THE SIMILAR CLIENT LIST AND/OR THE SOUND CONTEXT INFORMATION — 550

END

FIG. 5

START

610
RECEIVE SOUND DESCRIPTORS FROM CLIENT DEVICES

640
DETERMINE SIMILARITY BETWEEN THE SOUND DESCRIPTORS FROM THE CLIENT DEVICES AND SOUND DESCRIPTORS FROM SOUND CONTEXT DATABASE

620
DETERMINE SIMILARITY OF THE SOUND DESCRIPTORS FROM THE CLIENT DEVICES

650
IDENTIFY SOUND DESCRIPTOR FROM THE SOUND CONTEXT DATABASE HAVING GREATEST SIMILARITY FOR THE CLIENT DEVICE

630
GROUP THE CLIENT DEVICES INTO SIMILAR CONTEXT GROUP BASED ON THE SIMILARITY OF THE SOUND DESCRIPTORS

660
DETERMINE SOUND CONTEXT ASSOCIATED WITH THE IDENTIFIED SOUND DESCRIPTOR FROM THE SOUND CONTEXT DATABASE

670
SEND SIMILAR CLIENT LIST AND/OR THE SOUND CONTEXT TO THE CLIENT DEVICES

END

FIG. 6

FIG. 7

OCCURRENCE

HISTOGRAM OF CLIENT DEVICE 1

P1 P2 P3 P4 P5 P6 P7 P8 P9 P10 P11 P12 P13 P14 P15 P16

CLUSTER INDEX

OCCURRENCE

HISTOGRAM OF CLIENT DEVICE 2

P1 P2 P3 P4 P5 P6 P7 P8 P9 P10 P11 P12 P13 P14 P15 P16

CLUSTER INDEX

OCCURRENCE

HISTOGRAM OF CLIENT DEVICE 3

P1 P2 P3 P4 P5 P6 P7 P8 P9 P10 P11 P12 P13 P14 P15 P16

CLUSTER INDEX

FIG. 8

FIG. 9A

EP 2 681 895 B1

FIG. 9B

START

RECEIVE HISTOGRAMS OF ENVIRONMENTAL SOUNDS FROM CLIENT DEVICES —1010

DETERMINE SIMILARITY BETWEEN THE HISTOGRAM RECEIVED FROM THE CLIENT DEVICE AND HISTOGRAMS FROM SOUND CONTEXT DATABASE —1020

IDENTIFY HISTOGRAM FROM THE SOUND CONTEXT DATABASE HAVING GREATEST SIMILARITY VALUE FOR THE CLIENT DEVICE —1030

DETERMINE SOUND CONTEXT ASSOCIATED WITH THE IDENTIFIED HISTOGRAM FROM THE SOUND CONTEXT DATABASE —1040

SEND THE SOUND CONTEXT INFORMATION TO THE CLIENT DEVICES —1050

END

FIG. 10

START

1110 — RECEIVE HISTOGRAMS OF
ENVIRONMENTAL SOUNDS FROM
CLIENT DEVICES

1120 — SELECT CLIENT DEVICE AND
TARGET CLIENT DEVICE
FOR SIMILARITY DETERMINATION

1130 — DETERMINE SIMILARITY VALUE
BETWEEN THE SELECTED CLIENT
DEVICE AND THE TARGET CLIENT
DEVICE BASED ON THE HISTOGRAMS

1140 — THE
SIMILARITY VALUE >
THRESHOLD ?

NO → 1170 — SELECT ANOTHER
TARGET CLIENT DEVICE

YES

1150 — ADD THE TARGET CLIENT DEVICE TO
SIMILAR CLIENT LIST

1160 — ANY OTHER
TARGET CLIENT DEVICE
REMAINING?

YES

NO

1180 — SEND THE SIMILAR CLIENT LIST TO
THE CLIENT DEVICES

END

FIG. 11

START

1210
RECEIVE HISTOGRAMS OF ENVIRONMENTAL
SOUNDS FROM CLIENT DEVICES

1220
SELECT UNIQUE PAIR OF THE CLIENT
DEVICES

1230
DETERMINE SIMILARITY VALUE BETWEEN
THE SELECTED PAIR OF THE CLIENT
DEVICES BASED ON THE HISTOGRAMS

1240
ADD THE SIMILARITY VALUE TO
SIMILARITY MATRIX

1250
ANY OTHER
UNIQUE PAIR OF THE CLIENT DEVICES
REMAINING ?

YES

1260
SELECT ANOTHER
UNIQUE PAIR OF THE
CLIENT DEVICES

NO

1270
DETERMINE SIMILAR CLIENT CLUSTERS
FROM THE SIMILARITY MATRIX

1280
REQUEST
FOR THE SIMILAR CLIENT LIST FROM
THE CLIENT DEVICE ?

NO

YES

1290
SEND THE SIMILAR CLIENT LIST TO
THE CLIENT DEVICES

END

FIG. 12

FIG. 13

EP 2 681 895 B1

**EP 2 681 895 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008160977 A1
- WO 2010087797 A1
- US 2010216490 A1
- US 2010332668 A1
- US 2007130580 A1